# EUROPÄISCHE PATENTSCHRIFT

(11) **EP 3 966 731 B1**
(45) Veröffentlichungstag und Bekanntmachung des Hinweises auf die Patenterteilung: **28.01.2026**
(21) Anmeldenummer: 20724784.2
(22) Anmeldetag: 05.05.2020
(51) Int. Cl.: G06F 18/2413, G06V 10/44, G06V 10/82, G06V 20/10, G06V 10/10

(54) **MASCHINELLES LERNEN EINER OBJEKTERKENNUNG MITHILFE EINER ROBOTERGEFÜHRTEN KAMERA**
MACHINE LEARNING OF OBJECT RECOGNITION USING A ROBOT-GUIDED CAMERA
APPRENTISSAGE AUTOMATIQUE DE LA RECONNAISSANCE D'OBJETS À L'AIDE D'UNE CAMÉRA GUIDÉE PAR UN ROBOT

(30) Priorität: 06.05.2019 DE 102019206444
(43) Veröffentlichungstag der Anmeldung: 16.03.2022
(73) Patentinhaber: KUKA Deutschland GmbH, 86165 Augsburg (DE)
(72) Erfinder: SAFRONOV, Kirill, 86447 Aindling (DE); VENET, Pierre, 86152 AUGSBURG (DE)
(74) Vertreter: Wallinger Ricker Schlotter Tostmann
(86) Internationale Anmeldenummer: PCT/EP2020/062358
(87) Internationale Veröffentlichungsnummer: WO 2020/225229

(56) Entgegenhaltungen:
- DE-U1- 202017 001 227
- "Robot Manipulators", 30 September 2008, INTECH, ISBN: 978-953-76-1906-0, article S. Q. ET AL: "Vision-Guided Robot Control for 3D Object Recognition and Manipulation", XP055577313, DOI: 10.5772/6223
- MARIO PEÑA-CABRERA ET AL: "Machine vision approach for robotic assembly", ASSEMBLY AUTOMATION, vol. 25, no. 3, 1 September 2005 (2005-09-01), GB, pages 204 - 2016, XP055713926, ISSN: 0144-5154, DOI: 10.1108/01445150510610926

## Beschreibung

Die vorliegende Erfindung betrifft ein Verfahren und System zum maschinellen Lernen einer Objekterkennung mithilfe wenigstens einer robotergeführten Kamera und eines Lernobjekts bzw. zum Betreiben eines Roboters mithilfe der gelernten Objekterkennung sowie ein Computerprogrammprodukt zur Durchführung des Verfahrens.

Mithilfe einer Objekterkennung können Roboter vorteilhaft flexibler mit ihrer Umwelt interagieren, beispielsweise Objekte, die in vorab nicht bekannter Weise positioniert sind, greifen, bearbeiten oder dergleichen. Hierzu wird auf "Vision-Guided Robot Control for 3D Object Recognition and Manipulation"; S. Q. et al.; 2008; InTech" verwiesen, das Bildverarbeitungsverfahren betrifft; mit einem Fokus darauf, die Robustheit und Genauigkeit von Robotersystemen zu verbessern. Ferner wird auf "Machine Vision Approach for Robotic Assembly; Peña-Cabrera, M et al.; Assembly Automation AA25-3" das ein Verfahren zur Online-Erkennung und Klassifizierung von Teilen in Robotermontageaufgaben und deren Anwendung in einer intelligenten Fertigungszelle betrifft. Ferner wird auf DE 20 2017 001 227 U1 verwiesen, die ein Objekterkennungssystem aufweisend eine Steuervorrichtung, eine Basis, deren Position und Orientierung im Raum bekannt ist, derart, dass Basiskoordinatenwerte, welche die Position und Orientierung der Basis im Raum kennzeichnen, in der Steuervorrichtung gespeichert sind, betrifft.

Vorteilhaft können Objekterkennungen maschinell gelernt werden. Insbesondere können künstliche neuronale Netze darauf trainiert werden, in aufgenommenen Bildern Hüllquader bzw. -rechtecke, Masken oder dergleichen zu identifizieren.

Hierzu müssen bislang in einer großen Anzahl von Trainingsbildern die entsprechenden Hüllrechtecke manuelle markiert werden, insbesondere, wenn unterschiedliche Objekte bzw. Objekttypen erkannt bzw. robotisch gehandhabt werden sollen.

Eine Aufgabe einer Ausführung der vorliegenden Erfindung ist es, ein maschinelles Lernen einer Objekterkennung zu verbessern. Eine Aufgabe einer weiteren Ausführung der vorliegenden Erfindung ist es, einen Betrieb eines Roboters zu verbessern.

Diese Aufgaben werden durch ein Verfahren mit den Merkmalen des Anspruchs 1 bzw. 6 gelöst. Ansprüche 8, 9 stellen ein System bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist ein Verfahren zum maschinellen Lernen einer Objekterkennung mithilfe wenigstens einer robotergeführten Kamera und wenigstens eines Lernobjekts den Schritt auf:
- Positionieren der Kamera in unterschiedlichen Posen relativ zu dem Lernobjekt mithilfe eines Roboters, wobei in den Posen jeweils wenigstens ein Lokalisierungs-Bild, insbesondere ein zweidimensionales und/oder ein dreidimensionales Lokalisierungs-Bild, aufgenommen und gespeichert wird, welches das Lernobjekt abbildet.

Hierdurch können vorteilhaft verschiedene Lokalisierungs-Bilder wenigstens teilweise automatisiert aufgenommen werden, wobei die Aufnahmeperspektiven bzw. Posen der Bilder relativ zueinander aufgrund der bekannten Stellungen des kameraführenden Roboters bzw. der entsprechend bekannten Posen der robotergeführten Kamera bekannt sind, in einer Ausführung (gezielt) vorgegeben sind bzw. werden.

Eine Pose beschreibt in einer Ausführung eine ein-, zwei- oder dreidimensionale Position und/oder eine ein-, zwei- oder dreidimensionale Orientierung.

Nach einer Ausführung der vorliegenden Erfindung weist das Verfahren die Schritte auf:
- Ermitteln eines virtuellen Modells des Lernobjekts auf Basis der Posen und wenigstens einiger dieser Lokalisierungs-Bilder; und
- Ermitteln einer Pose einer Referenz des Lernobjekts in einem oder mehreren mit der Kamera aufgenommenen Trainings-Bildern, in einer Ausführung in einem oder mehreren der Lokalisierungs-Bildern und/oder einem oder mehreren Bildern mit einem oder mehreren in wenigstens einem d(ies)er Lokalisierungs-Bilder nicht abgebildeten Störobjekten, auf Basis dieses virtuellen Modells.

Durch die Ermittlung eines virtuellen Modells des Lernobjekts und die Verwendung dieses Modells zum Ermitteln einer Pose einer Referenz des Lernobjekts kann diese Pose vorteilhaft wenigstens teilweise automatisiert und dadurch einfach und/oder zuverlässig ermittelt und dann zum maschinellen Lernen genutzt werden, insbesondere bei vorab nicht bekannten Lernobjekten.

Entsprechend weist das Verfahren nach einer Ausführung der vorliegenden Erfindung den Schritt auf:
- maschinelles Lernen einer Objekterkennung der Referenz auf Basis der ermittelten Pose(n) in dem bzw. den Trainings-Bild(ern).

Die Referenz kann eine, in einer Ausführung vereinfachte, Repräsentation des Lernobjekts, in einer Ausführung einen, insbesondere dreidimensionalen, Körper, insbesondere Hüllkörper, in einer Ausführung einen (umhüllenden) Polyeder, insbesondere Quader, oder dergleichen, eine, insbesondere zweidimensionale, Kurve, insbesondere Hüllkurve, in einer Ausführung ein (umhüllendes Polygon), insbesondere Rechteck, oder dergleichen, eine Maske des Lernobjekts oder dergleichen aufweisen, insbesondere sein.

In einer Ausführung weist der Roboter wenigstens drei, insbesondere wenigstens sechs, in einer Ausführung wenigstens sieben, Achsen, insbesondere Drehgelenke, auf.

Durch wenigstens drei Achsen können in einer Ausführung vorteilhafte Kamerapositionen angefahren werden, durch wenigstens sechs Achsen vorteilhafte Kameraposen, durch wenigstens sieben Achsen vorteilhaft redundant, so dass beispielsweise Hindernissen ausgewichen werden kann oder dergleichen.

In einer Ausführung umfasst das maschinelle Lernen ein Trainieren eines, in einer Ausführung tiefen, künstlichen neuronalen Netzes, insbesondere Deep Convolutional Neural Network bzw. Deep Learning. Dies ist ein für die vorliegende Erfindung besonders geeignetes maschinelles Lern(verfahr)en. Entsprechend umfasst die (maschinell zu lernende bzw. gelernte) Objekterkennung in einer Ausführung ein (zu trainierendes bzw. trainiertes) künstliches neuronales Netz, kann insbesondere hierdurch implementiert sein.

In einer Ausführung umfasst das Ermitteln des virtuellen Modells ein Rekonstruieren einer dreidimensionalen Szene aus Lokalisierungs-Bildern, in einer Ausführung mittels eines Verfahrens zur visuellen simultanen Positionsbestimmung und Kartenerstellung ("visual SLAM").

Hierdurch kann in einer Ausführung das virtuelle Modell bei unbekannter Pose und/oder Gestalt des Lernobjekts vorteilhaft, insbesondere einfach und/oder zuverlässig, ermittelt werden.

Zusätzlich oder alternativ umfasst das Ermitteln des virtuellen Modells in einer Ausführung ein wenigstens teilweises Eliminieren einer in Lokalisierungs-Bildern abgebildeten Umgebung.

Hierdurch kann in einer Ausführung das virtuelle Modell bei unbekannter Pose und/oder Gestalt des Lernobjekts vorteilhaft, insbesondere einfach und/oder zuverlässig, ermittelt werden.

Zusätzlich oder alternativ wird bzw. ist das Lernobjekt in einer bekannten, in einer Ausführung leeren, Umgebung angeordnet, während die Lokalisierungs-Bilder aufgenommen werden, insbesondere auf einer (leeren) Oberfläche, in einer Ausführung bekannter Farbe und/oder Position, beispielsweise einem Tisch oder dergleichen.

Hierdurch kann in einer Ausführung das Eliminieren der Umgebung verbessert, insbesondere einfach(er) und/oder zuverlässig(er) durchgeführt werden.

Zusätzlich oder alternativ umfasst das Ermitteln des virtuellen Modells in einer Ausführung ein Filtern, in einer Ausführung vor und/oder nach dem Rekonstruieren einer dreidimensionalen Szene und/oder vor und/oder nach dem Eliminieren der Umgebung.

Hierdurch kann in einer Ausführung das virtuelle Modell vorteilhaft(er), insbesondere zuverlässig(er), ermittelt werden.

In einer Ausführung umfasst das Ermitteln des virtuellen Modells ein Ermitteln eines Punktwolken-Modells. Entsprechend kann das virtuelle Modell ein Punktwolken-Modell aufweisen, insbesondere sein.

Hierdurch kann in einer Ausführung das virtuelle Modell bei unbekannter Pose und/oder Gestalt des Lernobjekts besonders vorteilhaft, insbesondere einfach, flexibel und/oder zuverlässig, ermittelt werden.

Zusätzlich oder alternativ umfasst das Ermitteln des virtuellen Modells in einer Ausführung ein Ermitteln eines Netz-Modells, insbesondere Polygon(-Netz-)Modells, in einer Ausführung auf Basis des Punktwolken-Modells. Entsprechend kann das virtuelle Modell ein (Polygon-)Netz-Modell aufweisen, insbesondere sein.

Hierdurch kann in einer Ausführung die (weitere) Handhabung bzw. Verwendung des virtuellen Modells verbessert werden.

In einer Ausführung umfasst das Ermitteln der Pose der Referenz eine Transformation einer dreidimensionalen Referenz auf eine oder mehrere zweidimensionale Referenzen. Insbesondere kann zunächst die Pose einer dreidimensionale Maske oder eines dreidimensionalen (Hüll)Körpers in der rekonstruierten dreidimensionalen Szene und den entsprechenden einzelnen Lokalisierungs-Bildern ermittelt und dann auf die entsprechende Pose einer zweidimensionalen Maske oder einer zweidimensionalen (Hüll)Kurve transformiert, insbesondere abgebildet bzw. gemappt, werden.

Hierdurch kann die Pose der zweidimensionalen Referenz vorteilhaft, insbesondere einfach, ermittelt werden.

In einer Ausführung umfasst das Ermitteln der Pose der Referenz eine Transformation eines dreidimensionalen virtuellen Modells auf ein oder mehrere zweidimensionale virtuelle Modelle. Insbesondere kann zunächst die Pose des virtuelles Modells in der rekonstruierten dreidimensionalen Szene und den entsprechenden einzelnen Lokalisierungs-Bildern ermittelt und dann in diesen die entsprechende Pose einer zweidimensionalen Maske oder einer zweidimensionalen (Hüll)Kurve ermittelt werden.

Hierdurch kann die Pose der zweidimensionalen Referenz vorteilhaft, insbesondere zuverlässig, ermittelt werden.

Nach einer Ausführung der vorliegenden Erfindung weist ein Verfahren zum Betreiben eines, insbesondere des, Roboters die Schritte auf:
- Ermitteln einer Pose einer oder mehrerer Referenzen eines Betriebsobjekts mithilfe einer Objekterkennung, die mit einem hier beschriebenen Verfahren bzw. System gelernt worden ist; und
- Betreiben, insbesondere Steuern und/oder Überwachen, dieses Roboters auf Basis dieser Pose.

Eine erfindungsgemäß( gelernt)e Objekterkennung wird mit besonderem Vorteil zum Betreiben eines Roboters verwendet, wobei dieser Roboter in einer Ausführung auch zum Positionieren der Kamera in den unterschiedlichen Posen verwendet wird. In einer anderen Ausführung sind der kameraführende Roboter und der Roboter, der auf Basis der mithilfe der Objekterkennung ermittelten Pose betrieben wird, verschiedene Roboter. Ein Steuern eines Roboters umfasst in einer Ausführung eine Bahnplanung und/oder online-Steuerung, insbesondere Regelung. Das Betreiben des Roboters umfasst in einer Ausführung ein Kontaktieren, insbesondere Greifen, und/oder Bearbeiten des Betriebsobjekts.

In einer Ausführung nimmt wenigstens eine, in einer Ausführung durch den betriebenen oder einen anderen Roboter geführte, Kamera ein oder mehrere Erkennungs-Bilder, auf, welche (jeweils) das Betriebsobjekt abbilden, in einer Ausführung in unterschiedlichen Posen (relativ zu dem Betriebsobjekt) jeweils wenigstens ein Erkennungs-Bild. Die Pose der Referenz(en) des Betriebsobjekts wird/werden in einer Ausführung auf Basis dieses Erkennungs-Bildes bzw. dieser Erkennungs-Bilder ermittelt.

Hierdurch kann der Roboter in einer Ausführung vorteilhaft, insbesondere flexibel, mit seiner Umwelt interagieren, beispielsweise Objekte, die in vorab nicht bekannter Weise positioniert sind, kontaktieren, insbesondere greifen, bearbeiten oder dergleichen.

In einer Ausführung wird die (verwendete) Objekterkennung auf Basis des Betriebsobjekts aus mehreren vorhandenen Objekterkennungen, die mit einem hier beschriebenen Verfahren, in einer Ausführung jeweils für einen Objekttyp, gelernt worden sind, ausgewählt. In einer Ausführung werden hierzu nach dem jeweiligen Training die Koeffizienten des jeweils trainierten künstlichen neuronalen Netzes abgespeichert und für ein Betriebsobjekt, auf dessen Basis der Roboter betrieben werden soll, bzw. dessen Typ, beispielsweise für ein zu kontaktierendes, insbesondere zu greifendes, bzw. zu bearbeitendes Objekt bzw. dessen Typ, jeweils ein neuronales Netz mit den hierfür gespeicherten Koeffizienten parametriert.

Hierdurch kann in einer Ausführung ein, insbesondere gleich strukturiertes, künstliches neuronales Netz jeweils betriebsobjekt(typ)spezifisch parametriert und dadurch eine betriebsobjekt(typ)spezifische Objekterkennung aus mehreren maschinell gelernten objekt(typ)spezifischen Objekterkennungen ausgewählt werden. Dadurch kann in einer Ausführung eine zum Betreiben des Roboters verwendete Objekterkennung und dadurch der Betrieb des Roboters verbessert werden.

In einer Ausführung wird für die Objekterkennung ein ein- oder mehrdimensionaler Umgebungs- und/oder Kameraparameter auf Basis eines Umgebungs- und/oder Kameraparameters beim bzw. des maschinellen Lernen(s) vorgegeben, insbesondere gleich dem Umgebungs- bzw. Kameraparameter beim maschinellen Lernen. Der Parameter kann insbesondere eine Belichtung, einen (Kamera)Fokus oder dergleichen umfassen. In einer Ausführung wird der Umgebungs- und/oder Kameraparameter des maschinellen Lernens zusammen mit der gelernten Objekterkennung abgespeichert.

Dadurch kann in einer Ausführung eine zum Betreiben des Roboters verwendete Objekterkennung und dadurch der Betrieb des Roboters verbessert werden.

In einer Ausführung umfasst das Ermitteln der Pose einer Referenz des Betriebsobjekts eine Transformation einer oder mehrerer zweidimensionaler Referenzen auf eine dreidimensionale Referenz. In einer Ausführung werden die Posen zweidimensionalen Referenzen in verschiedenen Erkennungs-Bildern mithilfe der Objekterkennung ermittelt und hieraus die Pose einer entsprechenden dreidimensionalen Referenz ermittelt. Ist beispielsweise in drei zueinander senkrecht( aufgenommen)en Erkennungs-Bildern jeweils die Pose eines zweidimensionalen Hüllrechtecks mithilfe der Objekterkennung ermittelt, kann aus diesen die Pose eines dreidimensionalen Hüllquaders ermittelt werden.

In einer Ausführung wird auf Basis der Pose der Referenz des Betriebsobjekts eine Pose des Betriebsobjekts ermittelt, in einer Ausführung auf Basis eines virtuellen Modells des Betriebsobjekts. Ist zum Beispiel eine Pose eines dreidimensionalen Hüllkörpers ermittelt, kann in einer Ausführung dann das virtuelle Modell des Betriebsobjekts in diesem Hüllkörper ausgerichtet und solcherart auch die Pose des Betriebsobjekts ermittelt werden. Gleichermaßen kann in einer Ausführung die Pose des Betriebsobjekts in dem Hüllkörper mithilfe eines, insbesondere dreidimensionalen, Match(ingverfahr)ens, ermittelt werden.

Hierdurch kann ein Betrieb des Roboters, insbesondere ein Kontaktieren, insbesondere Greifen, und/oder Bearbeiten, des Betriebsobjekts verbessert werden, beispielsweise, indem die Lage geeigneter Kontakt-, insbesondere Greif-, oder Bearbeitungsflächen auf Basis des virtuellen Modells bzw. der Pose des Betriebsobjekts, ermittelt werden oder dergleichen.

In einer Ausführung werden auf Basis der Pose der Referenz des Betriebsobjekts, insbesondere der (hieraus ermittelten) Pose des Betriebsobjekts, eine oder mehrere Arbeitsstellungen des Roboters, insbesondere eine oder mehrere Arbeitsposen eines Endeffektors des Roboters, ermittelt, insbesondere geplant, in einer Ausführung auf Basis von für das Betriebsobjekt vorgegebener Betriebsdaten, insbesondere vorgegebener Kontakt-, insbesondere Greif-, oder Bearbeitungsflächen oder dergleichen. In einer Ausführung wird eine Bewegung, insbesondere Bahn, des Roboters zum Kontaktieren, insbesondere Greifen, oder Bearbeiten des Betriebsobjekts auf Basis der ermittelten Pose der Referenz bzw. des Betriebsobjekts und in einer Weiterbildung auf Basis der vorgegebenen Betriebsdaten, insbesondere Kontakt-, insbesondere Greif-, oder Bearbeitungsflächen, geplant und/oder durchgeführt bzw. abgefahren.

Nach einer Ausführung der vorliegenden Erfindung ist ein System, insbesondere hard- und/oder software-, insbesondere programmtechnisch, zur Durchführung eines hier beschriebenen Verfahrens eingerichtet.

Nach einer Ausführung der vorliegenden Erfindung weist ein bzw. das System auf:
- Mittel zum Positionieren der Kamera in unterschiedlichen Posen relativ zu dem Lernobjekt mithilfe eines Roboters, wobei in den Posen jeweils wenigstens ein Lokalisierungs-Bild, insbesondere ein zweidimensionales und/oder ein dreidimensionales Lokalisierungs-Bild, aufgenommen und gespeichert wird, welches das Lernobjekt abbildet;
- Mittel zum Ermitteln eines virtuellen Modells des Lernobjekts auf Basis der Posen und wenigstens einiger der Lokalisierungs-Bilder;
- Mittel zum Ermitteln einer Pose einer Referenz des Lernobjekts in wenigstens einem mit der Kamera aufgenommenen Trainings-Bild, insbesondere wenigstens einem der Lokalisierungs-Bilder und/oder wenigstens einem Bild mit wenigstens einem in wenigstens einem der Lokalisierungs-Bilder nicht abgebildeten Störobjekt, auf Basis des virtuellen Modells; und
- Mittel zum maschinellen Lernen einer Objekterkennung der Referenz auf Basis dieser ermittelten Pose in dem wenigstens einen Trainings-Bild.

Zusätzlich oder alternativ weist ein bzw. das System auf:
- Mittel zum Ermitteln einer Pose wenigstens einer Referenz eines Betriebsobjekts mithilfe einer Objekterkennung, die mit einem hier beschriebenen gelernt worden ist; und
- Mittel zum Betreiben des Roboters auf Basis dieser Pose.

In einer Ausführung weist das System bzw. sein(e) Mittel auf:
- Mittel zum Trainieren eines künstlichen neuronalen Netzes; und/oder
- Mittel zum Rekonstruieren einer dreidimensionalen Szene aus Lokalisierungs-Bildern; und/oder
- Mittel zum wenigstens teilweisen Eliminieren einer in Lokalisierungs-Bildern abgebildeten Umgebung; und/oder
- Mittel zum Filtern; und/oder
- Mittel zum Ermitteln eines Punktwolken Modells; und/oder
- Mittel zum Ermitteln eines Netz Modells; und/oder
- Mittel zum Transformieren einer dreidimensionalen Referenz auf wenigstens eine zweidimensionale Referenz und/oder eines dreidimensionalen virtuellen Modells auf wenigstens ein zweidimensionales virtuelles Modell; und/oder
- Mittel zum Aufnehmen wenigstens eines Erkennungs-Bilds mittels wenigstens einer, insbesondere robotergeführten, Kamera, welches das Betriebsobjekt abbildet, und Mittel zum Ermitteln der Pose auf Basis dieses Erkennungs-Bildes; und/oder
- Mittel zum Auswählen der Objekterkennung auf Basis des Betriebsobjekts aus mehreren vorhandenen Objekterkennungen, die mit einem hier beschriebenen Verfahren gelernt worden sind; und/oder
- Mittel zum Vorgeben eines Umgebungs- und/oder Kameraparameters für die Objekterkennung auf Basis eines Umgebungs- und/oder Kameraparameters beim maschinellen Lernen; und/oder
- Mittel zum Transformieren wenigstens einer zweidimensionalen Referenz auf eine dreidimensionale Referenz; und/oder
- Mittel zum Ermitteln einer Pose des Betriebsobjekts auf Basis der Pose der Referenz des Betriebsobjekts, insbesondere auf Basis eines virtuellen Modells des Betriebsobjekts; und/oder
- Mittel zum Ermitteln wenigstens einer Arbeitsstellung des Roboters, insbesondere einer Arbeitspose eines Endeffektors des Roboters, auf Basis der Pose der Referenz des Betriebsobjekts, insbesondere der Pose des Betriebsobjekts, insbesondere auf Basis von für das Betriebsobjekt vorgegebener Betriebsdaten.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere die Objekterkennung lernen bzw. den Roboter betreiben kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel.

In einer Ausführung weist das System den Roboter auf.

Weitere Vorteile und Merkmale ergeben sich aus den Unteransprüchen und den Ausführungsbeispielen. Hierzu zeigt, teilweise schematisiert:
- Fig. 1:: nach einer Ausführung der vorliegenden Erfindung; und
- Fig. 2:: nach einer Ausführung der vorliegenden Erfindung.

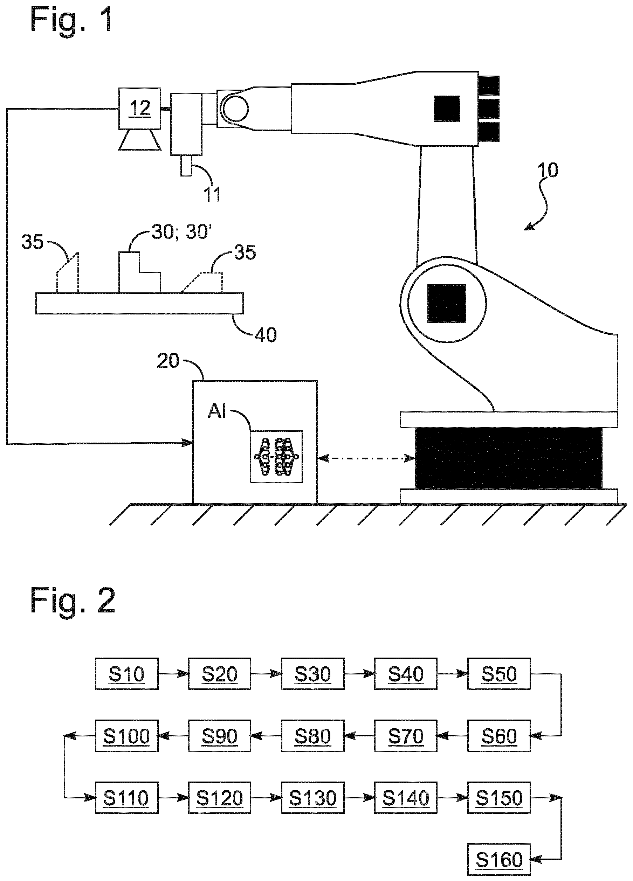

Fig. 1 zeigt ein System nach einer Ausführung der vorliegenden Erfindung mit einem Roboter 10, an dessen Greifer 11 eine (robotergeführte) Kamera 12 befestigt ist.

Zunächst wird mithilfe einer Robotersteuerung 20 eine Objekterkennung einer Referenz eines Lernobjekts 30 maschinell gelernt, das auf einem Tisch 40 angeordnet ist.

Dazu positioniert der Roboter 10 in einem Schritt S10 (vgl. Fig. 2) die Kamera 12 in unterschiedlichen Posen relativ zu dem Lernobjekt 30, wobei in den Posen jeweils ein zweidimensionales und ein dreidimensionales Lokalisierungs-Bild aufgenommen und gespeichert wird, welches das Lernobjekt 30 abbildet. Fig. 1 zeigt die robotergeführte Kamera 12 exemplarisch in einer solchen Pose.

Mittels eines Verfahrens zur visuellen simultanen Positionsbestimmung und Kartenerstellung wird aus den dreidimensionalen Lokalisierungs-Bildern eine dreidimensionale Szene mit dem Lernobjekt 30 und dem Tisch 40 rekonstruiert (Fig. 2: Schritt S20), aus der eine in diesen Lokalisierungs-Bildern abgebildete Umgebung in Form des Tisches 40 eliminiert, insbesondere heraussegmentiert, wird (Fig. 2: Schritt S30).

Nach einer Ausfilterung von Störsignalen (Fig. 2: Schritt S40, wobei Schritte S30 und S40 auch vertauscht sein können) wird hieraus ein virtuelles Punktwolken-Modell ermittelt (Fig. 2: Schritt S50), aus dem, beispielsweise mittels eines Poisson-Verfahrens, ein virtuelles Netz-Modell aus Polygonen ermittelt wird (Fig. 2: Schritt S60), das das Lernobjekt 30 repräsentiert.

Nun wird in einem Schritt S70 eine dreidimensionale Referenz des Lernobjekts 30 in Form eines dieses umschließenden Quaders ("bounding box") oder einer anderen Maske ermittelt und diese in einem Schritt S80 in die zweidimensionalen Lokalisierungs-Bilder aus Schritt S10 transformiert. Dabei wird jeweils die Pose der dreidimensionalen Referenz in dem jeweiligen dreidimensionalen Lokalisierungs-Bild ermittelt und hieraus die entsprechende Pose der entsprechenden zweidimensionalen Referenz in dem zugehörigen zweidimensionalen Lokalisierungs-Bild ermittelt, das die Kamera 12 in derselben Pose aufgenommen hat wie dieses dreidimensionale Lokalisierungs-Bild.

Anschließend werden in einem Schritt S90 Störobjekte 35 auf dem Tisch 40 platziert und dann noch weitere zweidimensionale Trainings-Bild aufgenommen, welches sowohl das Lernobjekt 30 als auch diese in den Lokalisierungs-Bildern aus Schritt S10 nicht abgebildeten Störobjekte 35 abbilden. Dabei wird die Kamera 12 vorzugsweise wieder in Posen positioniert, in denen sie auch schon die Lokalisierungs-Bilder aufgenommen hat. Auch in diese weiteren Trainings-Bilder wird jeweils in vorstehend beschriebener Weise die dreidimensionale Referenz des Lernobjekts 30 transformiert.

Dann wird in einem Schritt S100 ein künstliches neuronales Netz Al trainiert, in den zweidimensionalen Trainings-Bildern, die nunmehr jeweils das Lernobjekt 30, dessen zweidimensionale Referenz sowie teilweise auch zusätzliche Störobjekte 35 enthalten, die zweidimensionale Referenz des Lernobjekts 30 zu ermitteln.

Die auf diese Weise maschinell gelernte Objekterkennung bzw. das auf diese Weise trainierte neuronale Netz Al kann nun in zweidimensionalen Bildern, in denen das Lernobjekt 30 oder ein diesem (ausreichend) ähnliches, insbesondere typgleiches anderes Objekt 30' abgebildet ist, jeweils die entsprechende zweidimensionale Referenz, insbesondere also ein umschließendes Rechteck oder eine andere Maske, ermitteln.

Um mit dem Greifer 11 des Roboters 10 (oder einem anderen Roboter(greifer)) nun solche Betriebsobjekte 30' zu greifen, wird in einem Schritt S110 zunächst die entsprechende Objekterkennung, insbesondere also das entsprechend( trainiert)e künstliche neuronale Netz, ausgewählt, in einer Ausführung indem ein künstliches neuronales Netz Al mit den entsprechenden, für die Objekterkennung dieser Betriebsobjekte abgespeicherten Parameter parametriert wird.

Dann werden in einem Schritt S120 mit der Kamera 12 in unterschiedlichen Posen relativ zu dem Betriebsobjekt Erkennungs-Bilder aufgenommen, welche das Betriebsobjekt abbilden, in diesen Erkennungs-Bildern mittels des ausgewählten bzw. parametrierten neuronalen Netzes Al jeweils die zweidimensionale Referenz ermittelt (Fig. 2: Schritt S130) und hieraus mittels Transformation eine dreidimensionale Referenz des Betriebsobjekts 30' in Form eines dieses umschließenden Quaders oder einer anderen Maske ermittelt (Fig. 2: Schritt S140).

Auf Basis (der Pose) dieser dreidimensionalen Referenz und für das Betriebsobjekt 30' vorgegebener, objekttypspezifischer Betriebsdaten, beispielsweise eines virtuellen Modells, vorgegebener Greifpunkte oder dergleichen, wird dann in einem Schritt S150 eine geeignete Greifpose des Greifers 11 ermittelt, die der Roboter in einem Schritt S160 anfährt und das Betriebsobjekt 30' greift (Fig. 2: Schritt S170).

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Roboter
- 11: Greifer
- 12: Kamera
- 20: Robotersteuerung
- 30: Lernobjekt
- 30': Betriebsobjekt
- 35: Störobjekt
- 40: Tisch (Umgebung)
- Al: künstliches neuronales Netz

## Patentansprüche

1. Verfahren zum maschinellen Lernen einer Objekterkennung mithilfe wenigstens einer robotergeführten Kamera (12) und wenigstens eines Lernobjekts (30), mit den Schritten:
- Positionieren (S10) der Kamera in unterschiedlichen Kamera-Posen relativ zu dem Lernobjekt mithilfe eines Roboters (10), wobei in den Kamera-Posen jeweils wenigstens ein Lokalisierungs-Bild, insbesondere ein zweidimensionales und/oder ein dreidimensionales Lokalisierungs-Bild, aufgenommen und gespeichert wird, welches das Lernobjekt abbildet;
- Ermitteln (S20-S60) eines virtuellen Modells des Lernobjekts auf Basis der Kamera-Posen und wenigstens einiger der Lokalisierungs-Bilder, wobei das virtuelle Modell ein Punktwolken-Modell aufweist;
- Ermitteln (S70-S90) einer Pose einer Referenz des Lernobjekts, wobei die Referenz einen Hüllkörper aufweist, in wenigstens einem mit der Kamera aufgenommenen Trainings-Bild, insbesondere wenigstens einem der Lokalisierungs-Bilder und/oder wenigstens einem Bild mit wenigstens einem in wenigstens einem der Lokalisierungs-Bilder nicht abgebildeten Störobjekt, auf Basis des virtuellen Modells; und
- maschinelles Lernen (S100) einer Objekterkennung der Referenz auf Basis dieser ermittelten Pose in dem wenigstens einen Trainings-Bild.

2. Verfahren nach Anspruch 1, **dadurch gekennzeichnet, dass** der Roboter wenigstens drei Achsen, insbesondere Drehgelenke, aufweist.

3. Verfahren nach einem der vorhergehenden Ansprüche, **dadurch gekennzeichnet, dass** das maschinelle Lernen ein Trainieren eines künstlichen neuronalen Netzes (AI) umfasst.

4. Verfahren nach einem der vorhergehenden Ansprüche, **dadurch gekennzeichnet, dass** das Ermitteln des virtuellen Modells umfasst:
- Rekonstruieren (S20) einer dreidimensionalen Szene aus Lokalisierungs-Bildern;
- wenigstens teilweises Eliminieren (S30) einer in Lokalisierungs-Bildern abgebildeten Umgebung (40);
- Filtern (S40);
- Ermitteln (S50) eines Punktwolken-Modells.

5. Verfahren nach einem der vorhergehenden Ansprüche, **dadurch gekennzeichnet, dass** das Ermitteln der Pose der Referenz eine Transformation (S80) einer dreidimensionalen Referenz auf wenigstens eine zweidimensionale Referenz und/oder eines dreidimensionalen virtuellen Modells auf wenigstens ein zweidimensionales virtuelles Modell umfasst.

6. Verfahren zum Betreiben eines Roboters (10), mit den Schritten:
- Ermitteln (S130, S140) einer Pose wenigstens einer Referenz, wobei die Referenz einen Hüllkörper aufweist, eines Betriebsobjekts (30') mithilfe einer Objekterkennung, die mit einem Verfahren nach einem der vorhergehenden Ansprüche gelernt worden ist; und
- Betreiben (S150, S160) des Roboters auf Basis dieser Pose.

7. Verfahren nach dem vorhergehenden Anspruch, **dadurch gekennzeichnet, dass**
- wenigstens eine, insbesondere robotergeführte, Kamera wenigstens ein Erkennungs-Bild, aufnimmt (S120), welches das Betriebsobjekt abbildet, und die Pose auf Basis dieses Erkennungs-Bildes ermittelt wird;
- die Objekterkennung auf Basis des Betriebsobjekts aus mehreren vorhandenen, jeweils für einen Objekttyp gelernten, Objekterkennungen, die mit einem Verfahren nach einem der vorhergehenden Ansprüche 1 bis 5 gelernt worden sind, ausgewählt wird (S110);
- für die Objekterkennung ein Umgebungs- und/oder Kameraparameter auf Basis eines beim maschinellen Lernen verwendeten Umgebungs- und/oder Kameraparameters vorgegeben wird;
- das Ermitteln der Pose der Referenz des Betriebsobjekts eine Transformation (S140) wenigstens einer zweidimensionalen Referenz auf eine dreidimensionale Referenz umfasst;
- auf Basis der Pose der Referenz des Betriebsobjekts eine Pose des Betriebsobjekts ermittelt wird, insbesondere auf Basis eines virtuellen Modells des Betriebsobjekts; und/oder
- auf Basis der Pose der Referenz des Betriebsobjekts, insbesondere der hieraus ermittelten Pose des Betriebsobjekts, wenigstens eine Arbeitsstellung des Roboters, insbesondere eine Arbeitspose eines Endeffektors des Roboters, ermittelt wird (S150), insbesondere auf Basis von für das Betriebsobjekt vorgegebenen Betriebsdaten.

8. System zum maschinellen Lernen einer Objekterkennung mithilfe wenigstens einer robotergeführten Kamera (12) und wenigstens eines Lernobjekts (30) und/oder zum Betreiben eines Roboters (10), das zur Durchführung eines Verfahrens nach einem der vorhergehenden Ansprüche eingerichtet ist und/oder aufweist:
- Mittel zum Positionieren der Kamera in unterschiedlichen Kamera-Posen relativ zu dem Lernobjekt mithilfe eines Roboters (10), wobei in den Kamera-Posen jeweils wenigstens ein Lokalisierungs-Bild, insbesondere ein zweidimensionales und/oder ein dreidimensionales Lokalisierungs-Bild, aufgenommen und gespeichert wird, welches das Lernobjekt abbildet;
- Mittel zum Ermitteln eines virtuellen Modells des Lernobjekts auf Basis der Kamera-Posen und wenigstens einiger der Lokalisierungs-Bilder, wobei das virtuelle Modell ein Punktwolken-Modell aufweist;
- Mittel zum Ermitteln einer Pose einer Referenz des Lernobjekts, wobei die Referenz einen Hüllkörper aufweist, in wenigstens einem mit der Kamera aufgenommenen Trainings-Bild, insbesondere wenigstens einem der Lokalisierungs-Bilder und/oder wenigstens einem Bild mit wenigstens einem in wenigstens einem der Lokalisierungs-Bilder nicht abgebildeten Störobjekt, auf Basis des virtuellen Modells; und
- Mittel zum maschinellen Lernen einer Objekterkennung der Referenz auf Basis dieser ermittelten Pose in dem wenigstens einen Trainings-Bild und/oder aufweist:
- Mittel zum Ermitteln einer Pose wenigstens einer Referenz eines Betriebsobjekts (30') mithilfe einer Objekterkennung, die mit einem Verfahren nach einem der vorhergehenden Ansprüche 1 bis 5 gelernt worden ist; und
- Mittel zum Betreiben des Roboters auf Basis dieser Pose.

9. Computerprogrammprodukt mit einem Programmcode, der auf einem von einem Computer lesbaren Medium gespeichert ist, zur Durchführung eines Verfahrens nach einem der vorhergehenden Ansprüche 1 bis 7.

## Claims

1. A method of machine learning of an object recognition with the aid of at least one camera (12) guided by a robot and at least one learning object (30), the method comprising the steps of:
- positioning (S10) the camera in different camera poses relative to the learning object with the aid of a robot (10), wherein at least one localisation image, in particular a two-dimensional and / or a three-dimensional localisation image, is captured in each of the camera poses and stored, wherein the localisation image depicts the learning object;
- determining (S20-S60) a virtual model of the learning object on the basis of the camera poses and at least some of the localisation images, wherein the virtual model comprises a point cloud model;
- determining (S70-S90), on the basis of the virtual model, a pose of a reference of the learning object in at least one training image captured with the camera, in particular in at least one of the localisation images and / or in at least one image with at least one interfering object not depicted in at least one of the localisation images, wherein the reference comprises a bounding volume; and
- machine learning (S100) of an object recognition of the reference on the basis of this determined pose in the at least one training image.

2. The method according to claim 1, **characterised in that** the robot has at least three axes, in particular rotary joints.

3. The method according to any one of the preceding claims, **characterised in that** the machine learning comprises training an artificial neural network (AI).

4. The method according to any one of the preceding claims, **characterised in that** the determining of the virtual model comprises:
- reconstructing (S20) a three-dimensional scene from localisation images;
- at least partially eliminating (S30) an environment (40) depicted in localisation images;
- filtering (S40);
- determining (S50) a point cloud model.

5. The method according to any one of the preceding claims, **characterised in that** the determining of the pose of the reference comprises a transformation (S80) of a three-dimensional reference into at least one two-dimensional reference and / or a transformation (S80) of a three-dimensional virtual model into at least one two-dimensional virtual model.

6. A method of operating a robot (10), the method comprising the steps of:
- determining (S130, S140) a pose of at least one reference of an operating object (30') with the aid of an object recognition that has been learned using a method according to any one of the preceding claims, wherein the reference comprises a bounding volume; and
- operating (S150, S160) the robot on the basis of this pose.

7. The method according to the preceding claim, **characterised in that**
- at least one camera, in particular a camera guided by a robot, captures (S120) at least one recognition image which depicts the operating object, and the pose is determined on the basis of this recognition image;
- the object recognition is selected (S110) on the basis of the operating object from several existing object recognitions, each of which has been learned for an object type and which have been learned using a method according to any one of the preceding claims 1 to 5;
- for the object recognition, an environment parameter and / or a camera parameter is specified on the basis of an environment parameter and / or a camera parameter which has been used in the machine learning;
- the determining of the pose of the reference of the operating object comprises a transformation (S140) of at least one two-dimensional reference into a three-dimensional reference;
- a pose of the operating object is determined on the basis of the pose of the reference of the operating object, in particular on the basis of a virtual model of the operating object; and / or
- at least one working position of the robot, in particular a working pose of an end effector of the robot, is determined (S150) on the basis of the pose of the reference of the operating object, in particular on the basis of the pose of the operating object determined from this, in particular on the basis of operating data specified for the operating object.

8. A system for machine learning of an object recognition with the aid of at least one camera (12) guided by a robot and at least one learning object (30), and / or for operating a robot (10), which system is set up to carry out a method according to any one of the preceding claims and / or which comprises:
- means for positioning the camera in different camera poses relative to the learning object with the aid of a robot (10), wherein at least one localisation image, in particular a two-dimensional and / or a three-dimensional localisation image, is captured in each of the camera poses and stored, wherein the localisation image depicts the learning object;
- means for determining a virtual model of the learning object on the basis of the camera poses and at least some of the localisation images, wherein the virtual model comprises a point cloud model;
- means for determining, on the basis of the virtual model, a pose of a reference of the learning object in at least one training image captured with the camera, in particular in at least one of the localisation images and / or in at least one image with at least one interfering object not depicted in at least one of the localisation images, wherein the reference comprises a bounding volume; and
- means for machine learning of an object recognition of the reference on the basis of this determined pose in the at least one training image and / or comprises:
- means for determining a pose of at least one reference of an operating object (30') with the aid of an object recognition that has been learned using a method according to any one of the preceding claims 1 to 5; and
- means for operating the robot on the basis of this pose.

9. A computer program product with a program code which is stored on a computer-readable medium, for carrying out a method according to any one of the preceding claims 1 to 7.

## Revendications

1. Procédé d'apprentissage automatique d'une reconnaissance d'objet à l'aide d'au moins une caméra guidée par un robot (12) et d'au moins un objet d'apprentissage (30), avec les étapes :
- de positionnement (S10) de la caméra dans différentes poses de caméra par rapport à l'objet d'apprentissage à l'aide d'un robot (10), dans lequel respectivement au moins une image de localisation, en particulier une image de localisation bidimensionnelle et/ou tridimensionnelle, qui représente l'objet d'apprentissage, est capturée et enregistrée dans les poses de caméra ;
- de détermination (S20-S60) d'un modèle virtuel de l'objet d'apprentissage sur la base des poses de caméra et d'au moins certaines des images de localisation, dans lequel le modèle virtuel présente un modèle de nuage de points ;
- de détermination (S70-S90) d'une pose d'une référence de l'objet d'apprentissage, dans lequel la référence présente un corps d'enveloppe, dans au moins une image d'entraînement capturée avec la caméra, en particulier au moins une des images de localisation et/ou au moins une image avec au moins un objet perturbateur non représenté dans au moins une des images de localisation, sur la base du modèle virtuel ; et
- d'apprentissage automatique (S100) d'une reconnaissance d'objet de référence sur la base de cette pose déterminée dans l'au moins une image d'entraînement.

2. Procédé selon la revendication 1, **caractérisé en ce que** le robot présente au moins trois axes, en particulier des articulations rotatives.

3. Procédé selon l'une quelconque des revendications précédentes, **caractérisé en ce que** l'apprentissage automatique comprend un entraînement d'un réseau neuronal artificiel (IA).

4. Procédé selon l'une quelconque des revendications précédentes, **caractérisé en ce que** la détermination du modèle virtuel comprend :
- la reconstruction (S20) d'une scène tridimensionnelle à partir d'images de localisation ;
- l'élimination (S30) au moins partielle d'un environnement (40) représenté dans des images de localisation ;
- le filtrage (S40) ;
- la détermination (S50) d'un modèle de nuage de points.

5. Procédé selon l'une quelconque des revendications précédentes, **caractérisé en ce que** la détermination de la pose de la référence comprend une transformation (S80) d'une référence tridimensionnelle en au moins une référence bidimensionnelle et/ou d'un modèle virtuel tridimensionnel en au moins un modèle virtuel bidimensionnel.

6. Procédé pour faire fonctionner un robot (10), avec les étapes :
- de détermination (S130, S140) d'une pose d'au moins une référence, dans lequel la référence présente un corps d'enveloppe, d'un objet de fonctionnement (30') à l'aide d'une reconnaissance d'objet qui a été apprise avec un procédé selon l'une quelconque des revendications précédentes ; et
- de fonctionnement (S150, S160) du robot sur la base de cette pose.

7. Procédé selon la revendication précédente, **caractérisé en ce que**
- au moins une caméra, en particulier guidée par un robot, enregistre au moins une image de reconnaissance (S120), qui représente l'objet de fonctionnement, et la pose est déterminée sur la base de cette image de reconnaissance ;
- la reconnaissance d'objet sur la base de l'objet de fonctionnement est sélectionnée parmi plusieurs reconnaissances d'objet existantes, apprises chacune pour un type d'objet, qui ont été apprises avec un procédé selon l'une quelconque des revendications 1 à 5 précédentes (S110) ;
- un paramètre d'environnement et/ou de caméra est prédéfini pour la reconnaissance d'objet sur la base d'un paramètre d'environnement et/ou de caméra utilisé lors de l'apprentissage automatique ;
- la détermination de la pose de la référence de l'objet de fonctionnement comprend une transformation (S140) d'au moins une référence bidimensionnelle en une référence tridimensionnelle ;
- une pose de l'objet de fonctionnement est déterminée sur la base de la pose de référence de l'objet de fonctionnement, en particulier sur la base d'un modèle virtuel de l'objet de fonctionnement ; et/ou
- sur la base de la pose de la référence de l'objet de fonctionnement, en particulier de la pose de l'objet de fonctionnement déterminée à partir de celle-ci, au moins une position de travail du robot, en particulier une pose de travail d'un effecteur terminal du robot, est déterminée (S150), en particulier sur la base de données de fonctionnement prédéfinies pour l'objet de fonctionnement.

8. Système d'apprentissage automatique pour la reconnaissance d'objet à l'aide d'au moins une caméra guidée par un robot (12) et d'au moins un objet d'apprentissage (30) et/ou pour le fonctionnement d'un robot (10), qui est conçu pour la mise en œuvre d'un procédé selon l'une quelconque des revendications précédentes et/ou présente :
- des moyens pour positionner la caméra dans différentes poses de caméra par rapport à l'objet d'apprentissage à l'aide d'un robot (10), dans lequel au moins une image de localisation, en particulier une image de localisation bidimensionnelle et/ou tridimensionnelle, qui représente l'objet d'apprentissage, est capturée et enregistrée dans chacune des poses de caméra ;
- des moyens pour déterminer un modèle virtuel de l'objet d'apprentissage sur la base des poses de caméra et d'au moins certaines des images de localisation, dans lequel le modèle virtuel présente un modèle de nuage de points ;
- des moyens pour déterminer une pose d'une référence de l'objet d'apprentissage, dans lequel la référence présente un corps d'enveloppe, dans au moins une image d'entraînement capturée avec la caméra, en particulier au moins une des images de localisation et/ou au moins une image avec au moins un objet perturbateur non représenté dans au moins une des images de localisation, sur la base du modèle virtuel ; et
- des moyens pour l'apprentissage automatique d'une reconnaissance d'objet de la référence sur la base de cette pose déterminée dans l'au moins une image d'entraînement et/ou présente :
- des moyens pour déterminer une pose d'au moins une référence d'un objet de fonctionnement (30') à l'aide d'une reconnaissance d'objet qui a été apprise avec un procédé selon l'une quelconque des revendications 1 à 5 précédentes ; et
- des moyens pour faire fonctionner le robot sur la base de cette pose.

9. Produit-programme d'ordinateur avec un code de programme qui est stocké sur un support lisible par un ordinateur pour mettre en œuvre un procédé selon l'une quelconque des revendications 1 à 7 précédentes.
